# EUROPÄISCHE PATENTSCHRIFT

(11) **EP 1 038 427 B1**
(45) Veröffentlichungstag und Bekanntmachung des Hinweises auf die Patenterteilung: **20.08.2003**
(21) Anmeldenummer: 00105025.1
(22) Anmeldetag: 09.03.2000
(51) Int. Cl.: A01D 34/13

(54) **Klinge für ein Mähmesser**
Mower knife blade
Lame pour faucheuse

(30) Priorität: 24.03.1999 US 275206
(43) Veröffentlichungstag der Anmeldung: 27.09.2000
(73) Patentinhaber: DEERE & COMPANY, Moline, Illinois 61265-8098 (US)
(72) Erfinder: McCredie, Paul John, Milan, Illinois 61264 (US)
(74) Vertreter: Holst, Sönke, Dr.

(56) Entgegenhaltungen:
- EP-A- 0 280 393
- EP-A- 0 555 694
- CH-A- 184 804
- DE-A- 2 451 106
- GB-A- 2 023 390
- GB-A- 2 126 065
- GB-A- 2 216 380
- US-A- 5 241 811

## Beschreibung

Die Erfindung betrifft eine Klinge für ein Mähmesser, mit wenigstens einer Schneidkante.

Sich hin- und herbewegende Mähmesser werden verwendet, um Pflanzen und Erntegut zu schneiden. Eine Vielzahl von Klingen sind durch Schrauben oder Nieten am Messerbalken befestigt. Der Messerbalken bewegt sich in einem durch Abdeckungen des Messerbalkens definierten Kanal. Die Abdeckungen sind mit Schlitzen versehen, in denen die Klingen sich hin- und herbewegen. Die Kanten der Schlitze sind mit Leistenplatten oder Fingern versehen, die mit den sich hin- und herbewegenden Klingen zusammenwirken, um das Erntegut oder die Pflanzen durch eine scherenartige Wirkung abzuschneiden. Jede Klinge ist mit einem quer (d. h. in Schneidrichtung) verlaufenden Basisabschnitt und einem sich vom Basisabschnitt fort, längs erstreckenden Schneidabschnitt versehen. Der Basisabschnitt ist mit Befestigungslöchern zur Aufnahme der Nieten oder Schrauben versehen. Der Schneidabschnitt ist wiederum dreieckförmig und mit zwei Schneidkanten versehen. Benachbarte Klingen können einteilig miteinander verbunden sein, um Doppelklingen zu bilden. Einige Klingen haben Löcher, um Schmutz, der sich zwischen der Klinge und der Abdeckung angesammelt hat, abzuführen. Die Schrift GB-A-2 216 380 offenbart eine Klinge für ein Mähmesser, die wenigstens eine Schneidkante und zwei Löcher aufweist.

Die der Erfindung zugrunde liegende Aufgabe wird darin gesehen, die Betriebseigenschaften einer Klinge eingangs genannter Art zu verbessern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird eine Klinge bereitgestellt, die definierte, in Schneidrichtung verlaufende Sollbruchzonen aufweist. Die Schneidrichtung entspricht der Richtung, in der sich die Klinge beim Schneiden hin- und herbewegt. Die Klinge bricht entlang einer dieser Sollbruchzonen ab, wenn ein Stein oder ein anderer Fremdkörper zwischen die sich hin- und herbewegenden Klinge und die Abdeckung gelangt.

Ein Vorteil der Erfindung besteht darin, daß die Klinge auch dann noch funktioniert, wenn sie an einer Sollbruchzone abgebrochen ist. Außerdem wird eine Beschädigung der beschriebenen Abdeckung durch eine sich beim Eindringen eines Steins oder anderen Fremdkörpers verbiegende Klinge verhindert.

Vorzugsweise sind wenigstens zwei der Löcher in den mit der Schneidkante versehenen Schneidabschnitt der Klinge eingebracht, die in der Regel voneinander beabstandet auf der quer zur Schneidrichtung verlaufenden Längsmittelachse des Schneidabschnitts liegen.

Außerdem weist die Klinge einen Basisabschnitt auf, an dem der Schneidabschnitt angebracht ist. Der Basisabschnitt hat eine in Schneidrichtung verlaufende Achse. In ihn sind in der Regel zwei Befestigungslöcher eingebracht, die zur Fixierung der Klinge am Messerbalken dienen.

Die Klinge ist vorzugsweise durchgehend gehärtet, so daß sie nicht verbiegt, wenn sie in Kontakt mit Steinen oder anderen Fremdkörpern kommt, sondern abbricht.

Auch im Basisabschnitt kann ein Loch vorgesehen sein, das eine in Schneidrichtung verlaufende Sollbruchzone definiert.

Es bietet sich an, den Durchmesser der Löcher in der Klinge derart zu gestalten, daß er mit steigendem Abstand des jeweiligen Lochs von der Spitze der Klinge anwächst. Das kleinste Loch ist also am nächsten zur Spritze der Klinge, während das größte von ihr am weitesten entfernt ist. Man erreicht damit, daß die schwächste Sollbruchstelle an der Spitze der Klinge liegt, so daß der verbleibende Rest der Klinge nach einem eventuellen Abbrechen an dieser Sollbruchstelle noch funktionstüchtig bleibt.

Schließlich kann die Klinge als Doppelklinge ausgeführt sein.

In den Zeichnungen ist ein nachfolgend näher beschriebenes Ausführungsbeispiel der Erfindung dargestellt. Es zeigt:
- Fig. 1: eine Draufsicht auf einen Abschnitt eines Mähmessers; und
- Fig. 2: eine Draufsicht auf eine Doppelklinge.

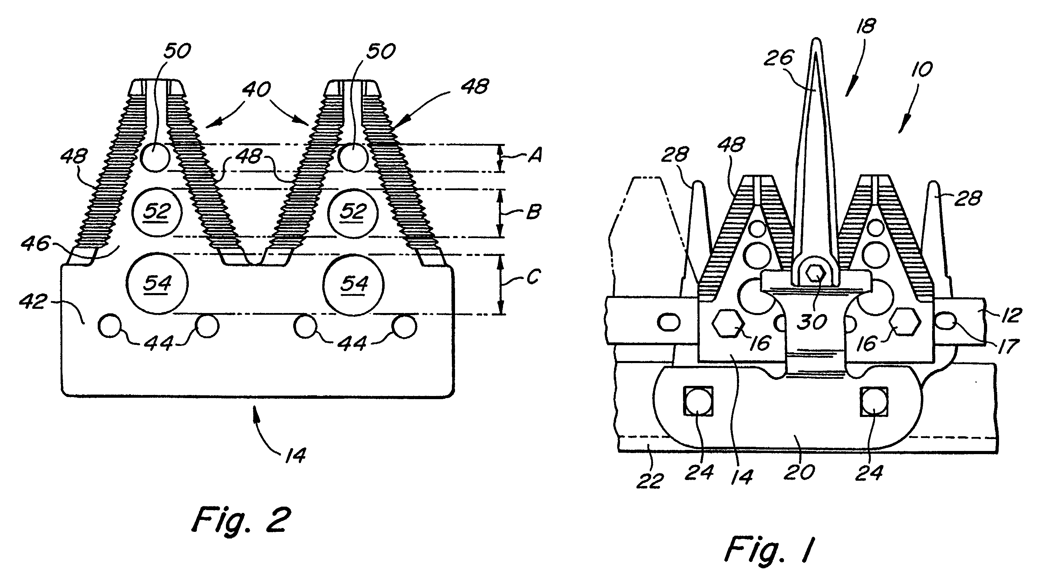

Figur 1 offenbart einen Abschnitt eines Mähmessers 10 mit einem Messerbalken 12, der mit einer Reihe ovaler Löcher 17 versehen ist. Eine Doppelklinge 14 ist am Messerbalken 12 durch Befestigungsschrauben 16 befestigt. Jede Befestigungsschraube 16 mit einem ovalen Kehlabschnitt versehen, der in die ovalen Löcher 17 paßt. Der Messerbalken 12 und die Doppelklingen 14 bewegen sich in Abdeckungen 18 mit Niederhaltelaschen 20. Die Niederhaltelaschen 20 sind gemeinsam mit einer Reihe von Abdeckungen 18, von denen nur eine gezeigt ist, mittels Schrauben 24 an einen Träger 22 geschraubt. Die dargestellte Abdeckung 18 ist mit einem mittigen langen Finger 26 und zwei äußeren kurzen Fingern 28 ausgestattet. Abdeckungen, die neben den dargestellten Abdeckungen 18 angeordnet sind, hätten zwei äußere lange Finger und einen mittleren kurzen Finger. Eine Niederhalterschraube 30 wird verwendet, um die Spitze der Niederhaltelasche 20 in Richtung auf die Doppelklinge 14 zu vorzuspannen.

Jede Doppelklinge 14 ist durchgehend gehärtet, um zu erreichen, daß sie bricht, bevor sie verbiegt. Steine und andere Fremdkörper, die zwischen der Doppelklinge 14- und der Niederhaltelasche 20 gefangen werden, brechen die Klinge 40 an einer in der Schneidrichtung verlaufenden Sollbruchzone ab, bevor die Niederhaltelasche 20 beschädigt wird. Die Schneidrichtung verläuft in den Figuren in seitlicher Richtung.

Jede Doppelklinge 14 hat zwei vollständige, identische Klingen 40. Jede Klinge 40 hat wiederum einen Basisabschnitt 42, der eine im wesentlichen quer verlaufende Längsachse aufweist. Der Basisabschnitt 42 ist mit zwei Befestigungslöchern 44 ausgestattet. Ein Schneidabschnitt 46 erstreckt sich entlang des Basisabschnitts 42. Jeder Schneidabschnitt 46 ist mit zwei Schneidkanten 48 versehen. In der dargestellten Ausführungsform sind die Schneidkanten 48 geriffelt. Es ist anzumerken, daß jeder Basisabschnitt 42 mit zwei Befestigungslöchern 44 versehen ist, so daß jede Doppelklinge 14 mit vier Befestigungslöchern 44 ausgestattet ist. Typischerweise werden, wie in Figur 1 dargestellt, nur zwei Befestiungsschrauben 16 verwendet, um die Doppelklinge 14 am Messerbalken 12 zu befestigen. Jedoch können an Verbindungsstellen (insbesondere zweier Messerbalkenabschnitte) alle vier Befestigungslöcher 44 der Doppelklinge 14 Befestigungsschrauben 16 enthalten.

Jede Klinge 40 ist mit drei kreisförmigen Löchern 50, 52 und 54 versehen, die entlang der Mittellängslinie der Klinge 40 angeordnet sind. Diese Löcher 50, 52 und 54 definieren jeweils quer, also in Schneidrichtung verlaufende Sollbruchzonen A, B und C. Diese Löcher werden beim Übergang vom Schneidabschnitt 46 zum Basisabschnitt 42 sukzessive größer. Zwei der Löcher 50, 52 sind im Schneidabschnitt 46 der Klinge 40 angeordnet. Wenn beispielsweise ein Stein zwischen dem langen Finger 26 und dem oberen Teil einer der Klingen 40 gefangen wird, würde die Hinund Herbewegung des Messerbalkens 12 die Spitze der Klinge 40 an der quer verlaufenden Sollbruchzone A, die durch das Loch 50 definert ist, abbrechen. Die Abschnitte der Schneidkanten 48 unterhalb der Bruchstelle würden weiterhin schneiden, wenn auch in einem weniger effizienten Maß. Wenn Steine oder andere Fremdkörper weiter unten gefangen werden, kann der- Bruch der Klinge 40 an der quer verlaufenden Sollbruchzone B erfolgen. Weiterhin würde ein kleiner Abschnitt der Schneidkanten 48 unterhalb der Bruchstelle funktionieren.

Der Basisabschnitt 42 ist mit einem dritten Loch 54 versehen, der die Sollbruchzone C definiert. Ein Teil des Lochs 54 erstreckt sich in den Schneidabschnitt 46. In den schwersten Fällen wird die Klinge 40 am Loch 54 entlang der Sollbruchzone C abbrechen. Ein derartiger Bruch würde die Schneidkanten 48 der gebrochenen Klinge 40 außer Betrieb setzen, aber die andere Klinge 40 der Doppelklinge 14 würde noch schneiden.

Wie in den Figuren dargestellt, haben die Löcher 50, 52 und 54 verschiedene Größen. Diese Löcher 50, 52, 54 sind derart bemessen, daß ein Abbrechen stattfindet, bevor die Abdeckung 18 an unterschiedlichen möglichen Kontaktstellen zwischen der Abdeckung 18 und der Klinge 40 bricht.

## Patentansprüche

1. Klinge (40) für ein Mähmesser (10), die wenigstens eine Schneidkante (48) und zumindest zwei Löcher (50, 52, 54) aufweist, **dadurch gekennzeichnet, daß** die Löcher jeweils eine in Schneidrichtung verlaufende Sollbruchzone (A, B, C) definieren.

2. Klinge (40) nach Anspruch 1, **dadurch gekennzeichnet, daß** sie einen Schneidabschnitt (46) aufweist, an dem die Schneidkante (48) liegt, und daß mindestens zwei der Löcher (50, 52) im Schneidabschnitt (46) angeordnet sind.

3. Klinge (40) nach Anspruch 1 oder 2, **dadurch gekennzeichnet, daß** sie einen Basisabschnitt (42) aufweist, der mit Befestigungslöchern (44) zur Befestigung der Klinge (40) an einem Messerbalken (12) versehen ist.

4. Klinge (40) nach einem der vorhergehenden Ansprüche, **dadurch gekennzeichnet, daß** sie an einer der Sollbruchzonen (A, B, C) abbricht, bevor sie eine Abdeckung (18), unterhalb oder innerhalb der die Klinge (40) sich hin- und herbewegt, abbricht.

5. Klinge (40) nach einem der vorhergehenden Ansprüche, **dadurch gekennzeichnet, daß** sie durchgehend gehärtet ist.

6. Klinge (40) nach einem der vorhergehenden Ansprüche, **dadurch gekennzeichnet, daß** sie mit zwei Schneidkanten (48) versehen ist.

7. Klinge (40) nach einem der Ansprüche 3 bis 6, **dadurch gekennzeichnet, daß** der Basisabschnitt (42) mit mindestens einem Loch (54) versehen ist, das eine in Schneidrichtung verlaufende Sollbruchzone (C) definiert.

8. Klinge (40) nach einem der vorhergehenden Ansprüche, **dadurch gekennzeichnet, daß** die wenigstens zwei Löcher (50, 52, 54) auf der quer zur Schneidrichtung verlaufenden Längsmittelachse der Klinge (40) angeordnet sind.

9. Klinge (40) nach einem der vorhergehenden Ansprüche, **dadurch gekennzeichnet, daß** die Löcher (50, 52, 54) mit zunehmendem Abstand von der Spitze der Klinge (40) größer werden.

10. Klinge (40) nach einem der vorhergehenden Ansprüche, **dadurch gekennzeichnet, daß** sie einteilig mit einer zweiten Klinge (40) ist und eine Doppelklinge (14) bildet.

## Claims

1. A blade (40) for a mower knife (10), which comprises at least one cutting edge (48) and at least two holes (50, 52, 54), **characterized in that** the holes each define a respective predetermined breaking zone (A, B, C) running in the cutting direction.

2. A blade (40) according to claim 1, **characterized in that** has a cutting section (46), on which the cutting edge lies (48), and **in that** at least two of the holes (50, 52) are located in the cutting section (46).

3. A blade (40) according to claim 1 or 2, **characterized in that** it comprises a base section (42), which is provided with fixing holes (44) for fixing the blade (40) on a mower bar (12).

4. A blade (40) according to any of any of the preceding claims, **characterized in that** the it breaks off at one of the predetermined breaking zones (A, B, C) before it breaks off a cover part (18) below or within which the blade (40) reciprocates.

5. A blade (40) according to any of the preceding claims, **characterized in that** it is hardened throughout.

6. A blade (40) according to any of the preceding claims, **characterized in that** it is provided with two cutting edges (48).

7. A blade (40) according to any of claims 3 to 6, **characterized in that** the base section (42) is provided with at least one hole (54) which defines a predetermined breaking zone (C) running in the cutting direction.

8. A blade (40) according to any of the preceding claims, **characterized in that** the at least two holes (50, 52, 54) are arranged on the longitudinal central axis of the blade (40) running transverse to the cutting direction.

9. A blade (40) according to any of the preceding claims, **characterized in that** the holes (50, 52, 54) become larger with increasing distance from the tip of the blade (40).

10. A blade (40) according to any of the preceding claims, **characterized in that** it is unitary with a second blade (40) and forms a double blade (14).

## Revendications

1. Lame (40) pour une faucheuse (10), qui comporte au moins une arête coupante (48) et au moins deux trous (50, 52, 54), **caractérisée en ce que** les trous définissent chacun une zone destinée à la rupture (A, B, C) s'étendant dans le sens de coupe.

2. Lame (40) selon la revendication 1, **caractérisée en ce qu'**elle comporte un tronçon de coupe (46) sur lequel est placée l'arête coupante (48) et **en ce qu'**au moins deux des trous (50, 52) sont disposés dans le tronçon de coupe (46).

3. Lame (40) selon la revendication 1 ou 2, **caractérisée en ce qu'**elle comporte un tronçon de base (42) qui est pourvu de trous de fixation (44) pour la fixation de la lame (40) sur une barre de coupe (12).

4. Lame (40) selon l'une quelconque des revendications précédentes, **caractérisée en ce qu'**elle se rompt dans l'une des zones destinées à la rupture avant de rompre un couvercle (18) sous lequel ou à l'intérieur duquel la lame (40) effectue un mouvement de va-et-vient.

5. Lame (40) selon l'une quelconque des revendications précédentes, **caractérisée en ce qu'**elle est trempée en continu.

6. Lame (40) selon l'une quelconque des revendications précédentes, **caractérisée en ce qu'**elle est pourvue de deux arêtes de coupe (48).

7. Lame (40) selon l'une quelconque des revendications 3 à 6, **caractérisée en ce que** le tronçon de base (42) est pourvu d'au moins un trou (54) qui délimite une zone destinée à la rupture (C) s'étendant dans le sens de coupe.

8. Lame (40) selon l'une quelconque des revendications précédentes, **caractérisée en ce que** les au moins deux trous (50, 52, 54) sont disposés sur l'axe médian longitudinal de la lame (40) s'étendant perpendiculairement au sens de coupe.

9. Lame (40) selon l'une quelconque des revendications précédentes, **caractérisée en ce que** la taille des trous (50, 52, 54) augmente en même temps que l'écart par rapport à la pointe de la lame (40) augmente.

10. Lame (40) selon l'une quelconque des revendications précédentes, **caractérisée en ce qu'**elle est faite en une seule partie avec une seconde lame (40) et **en ce qu'**elle forme une lame double (14).
